# EUROPÄISCHE PATENTANMELDUNG

(11) **EP 1 554 919 A1**
(43) Veröffentlichungstag der Anmeldung: **20.07.2005**
(21) Anmeldenummer: 05000824.2
(22) Anmeldetag: 17.01.2005
(51) Int. Cl.: A01D 34/66, A01D 57/20

(54) **Anlenkung eines Seitenmähwerks und seiner Zusatzeinrichtungen an ein Tragwerk zur Ankopplung an einen Traktor oder Trägerfahrzeug**

(30) Priorität: 17.01.2004 DE 102004028537
(71) Anmelder: CLAAS Saulgau GmbH, 88348 Bad Saulgau (DE)
(72) Erfinder: Geng, Manfred, 88348 Bad Saulgau (DE)

(57) **Zusammenfassung**

Verfahren zum Überführen eines Seitenmähwerks (1 oder 1') in unterschiedliche Betriebszustände und für den Anbau an Traktoren (6) oder als Teil selbstfahrender Mähwerke, mit um lotrechte Achsen angetriebene mit Mähklingen besetzte Mähwerkzeuge und einem Aufbereiter (2) und mit einer hinter dem Mähwerk nachgeschalteten Fördereinrichtung (16 oder 16'), zum seitlichen Versetzen und Ablegen der Mahd, und wobei Mähwerk (1) und Aufbereiter (2) eine Baueinheit bilden und durch einen Ausleger (4) mit dem Tragwerk (5) in einer Gelenkverbindung um eine überwiegend in Fahrtrichtung (F) ausgerichtete horizontale Achse verschwenkbar miteinander verbunden sind, und die Fördereinrichtung (16 oder 16') ebenfalls über einen Ausleger (7) mit dem Tragwerk (5) in einer Gelenkverbindung um eine überwiegend in Fahrtrichtung (F) ausgerichtete horizontale Achse verschwenkbar verbunden sind, wobei die Fördereinrichtung (16 und/oder 16') zur Überführung in unterschiedlicher Betriebszustände des Mähbetriebs, nämlich mit und ohne Eingriff in den Mähbetrieb, einem Bewegungsablauf in Ihren Schwenkbewegungen zu deren Überführung unterworfen werden können derart, dass zum einen eine Schwenkbewegung um eine überwiegend horizontale in Fahrtrichtung (F) weisende Gelenkachse (8) und zum anderen eine Schwenkbewegung um eine überwiegend vertikale Gelenkachse der Schwenkachse (27) ausgeführt werden kann, wobei diese Schwenkbewegungen variabel in ihrer Abfolge und unabhängig voneinander um ihre Gelenkachsen (8,27) ausgeführt werden können.

## Beschreibung

Die Erfindung bezieht sich auf die Anlenkung eines Seitenmähwerks und seiner Zusatzeinrichtungen an ein Tragwerk zur Ankopplung an einen Traktor oder an ein selbstfahrendes Mähwerk gemäß dem Oberbegriff nach Anspruch 1.

In der DE102 34 741.7 ist vorgesehen, dass wenigstens einem Seitenmähwerk mit einem erster Ausleger wenigstens ein zweiter Ausleger zugeordnet ist, wobei dem wenigstens zweiten Ausleger mindestens eine Zusatzeinrichtung, beispielsweise ein Aufbereiter oder eine Querfördereinrichtung zugeordnet ist.

Dabei sind sowohl der erste als auch der zweite Ausleger unabhängig voneinander von separaten Stellantrieben, die beispielsweise als Hydraulikzylinder ausgebildet sein können, um etwa in Fahrtrichtung ausgerichtete horizontale Gelenkachsen in eine Transportstellung verschwenkbar.

Dabei kann die Anlenkung der zweiten Ausleger auch so gestaltet sein, dass diese um vertikale Gelenkachsen entgegen der Fahrtrichtung nach hinten mittels eines Hydraulikzylinders verschwenkbar sind, um diese alternativ auch in eine etwa horizontale Transportposition entgegen der Fahrtrichtung nach hinten verschwenken zu können.

Es hat sich in der Praxis gezeigt, dass es aus Gründen des Unfallschutzes zweckmäßig ist, dass die Schutzhaube der Aufbereiters soweit nach hinten verlängert wird, das diese zumindest teilweise das Förderband der Fördereinrichtung übergreift. Nachteilig ist dann aber, dass das Förderband als Teil der Querfördereinrichtung nicht separat und unabhängig von den Mähwerken hochgeklappt werden kann, weil eben die Schutzhauben der Aufbereiter dem entgegenstehen. Mit der hier offenbarten Erfindung soll dieser Nachteil behoben werden.

Aufgabe der Erfindung ist es, ein derartiges Mähwerk weiter zu entwickeln und um damit seine Handhabung zur Überführung in unterschiedliche Betriebszustände wie Arbeitszustand oder Transportzustand zu verbessern.

Gelöst wird die Aufgabe der Erfindung mit den kennzeichnenden Merkmalen des unabhängigen Hauptanspruchs. Weitere vorteilhafte Ausgestaltungen der Erfindung sind den abhängigen Ansprüchen, der Beschreibung und den Figurendarstellungen zu entnehmen.

Ein Seitenmähwerk nach der Erfindung beinhaltet zwei unabhängige Stellantriebe beispielsweise in Form von Hydraulikzylindern zum unabhängigen Verschwenken der Mähwerke bzw. der Fördereinrichtung um die horizontalen etwa in Fahrtrichtung verlaufenden Gelenkachsen und Stellantriebe in Form von Hydraulkzylindern, welche es ermöglichen, bei einer entsprechenden Ansteuerung dieser Hydraulkzylinder, die Fördereinrichtung entgegen der Fahrtrichtung um die vertikalen Gelenkachsen nach hinten zu verschenken. Die Kombination beider Schwenkbewegungen, sowohl die um die horizontale Gelenkachse als auch die um die vertikale Gelenkachse ermöglicht eine besonders einfache Lösung und damit die Umgehung des Durchdringungsproblems zwischen der Schutzhaube der Fördereinrichtung des Aufbereiters, indem diese Schwenkbewegungen zeitlich hintereinander abfolgend ausgeführt werden. Zu diesem Zweck kann die Fördereinrichtung vorübergehend soweit entgegen der Fahrtrichtung um die vertikalen Gelenkachse nach hinten verschenkt werden, das der Übergriff der Schutzhaube des Aufbereiters verschwindet. In dieser Situation können dann sowohl die Mähwerke mit Ihren Aufbereitern und die Fördereinrichtungen wieder völlig unabhängig voneinander um ihre horizontale Gelenkachse verschwenkt werden, wobei dann auch die Fördereinrichtung in den jeweiligen Endlagen der verschwenkten Mähwerke wieder in Ihre Ausgangsposition zurück geschwenkt werden können.

Diese nacheinander abfolgenden Bewegungsabläufe beinhalten zudem den Vorteil, dass das momentane Reaktionsmoment infolge des Aktionsmomentes zur Herbeiführung des Schwenkvorgangs um die horizontale Gelenkachse, welches vom Traktor aufgenommen werden muss, in seinem Betrag wesentlich geringer ausfällt, als dieses der Fall wäre, wenn beide Einrichtungen, Mähwerk, und Querfördereinrichtung, gleichzeitig verschwenkt würden. Dieses erhöht die Standsicherheit und reduziert damit ein eventuelles Unfallrisiko.

Somit können unabhängig von der Reihenfolge des Verschwenkens um die horizontale Gelenkachse 8, beide Einrichtungen, sowohl das Mähwerk 1,1' mit seinem Aufbereiter 2 als fest miteinander verbundene Einheit, als auch davon losgelöst die Fördereinrichtung 16,16' mit seinem Förderband, sowohl in ihre Arbeitsposition als auch in ihre vertikale Transportposition unabhängig voneinander verbracht werden.

Anhand des nachfolgend dargelegten Ausführungsbeispiels soll die Erfindung im einzelnen am Beispiel eines Kreiselmähwerks mit integriertem Aufbereiter in Verbindung mit einem Förderband als Querfördereinrichtung zur Bildung eines Großschwads näher dargelegt und erläutert werden:
- Fig. 1: zeigt eine Mähwerkskombination in einer Draufsicht bestehend aus einem Traktor mit angebautem Frontmähwerk mit einem Doppel-Seitenmähwerk mit Querfördereinrichtung in einer Arbeitsstellung zur Bildung eines Großschwads
- Fig. 1a: zeigt einen vergrößerten Ausschnitt aus Fig. 1 des Traggestells von oben in einer Draufsicht mit einer Koppelstange als Koppelglied
- Fig. 1b: zeigt einen vergrößerten Ausschnitt aus Fig. 1 des Traggestells von oben in einer Draufsicht mit einem Hydraulikzylinder als Koppelglied in der Arbeitsstellung
- Fig. 1c: zeigt einen vergrößerten Ausschnitt aus Fig. 1 des Traggestells von oben in einer Draufsicht mit einem ausgefahrenen Hydraulikzylinder als Koppelglied mit einer verschwenkten Stellung des zweiten Auslegers
- Fig. 2: zeigt eine Mähwerkskombination in einer Draufsicht bestehend aus einem Traktor mit angebautem Frontmähwerk und einem Doppel-Seitenmähwerk mit hochgeklappter Querfördereinrichtung in einer Arbeitsstellung zur Bildung von drei Einzelschwaden
- Fig. 3: zeigt eine Mähwerkskombination in einer Draufsicht bestehend aus einem Traktor mit angebautem Frontmähwerk mit einem Doppel-Seitenmähwerk mit Querfördereinrichtung in einer Arbeitsstellung nach dem Ansprechen der Anfahrsicherung
- Fig. 4: zeigt einen vergrößerten Ausschnitt aus Fig. 3
- Fig. 5: zeigt ein Doppel-Heckmähwerk gemäß Fig.1 in einer Draufsicht mit abgekoppelter Querfördereinrichtung in einer Arbeitsstellung.
- Fig. 6: zeigt eine abgekoppelte Querfördereinrichtung gemäß Fig.1 in einer Draufsicht in einer Arbeitsstellung.
- Fig. 7: zeigt eine Mähwerkskombination in einer Draufsicht bestehend aus einem Traktor mit angebautem Frontmähwerk mit einem Doppel-Seitenmähwerk mit Querfördereinrichtung in einer Transportstellung mit hochgeklappten Seitenmähwerken und hochgeklappten Fordereinrichtungen

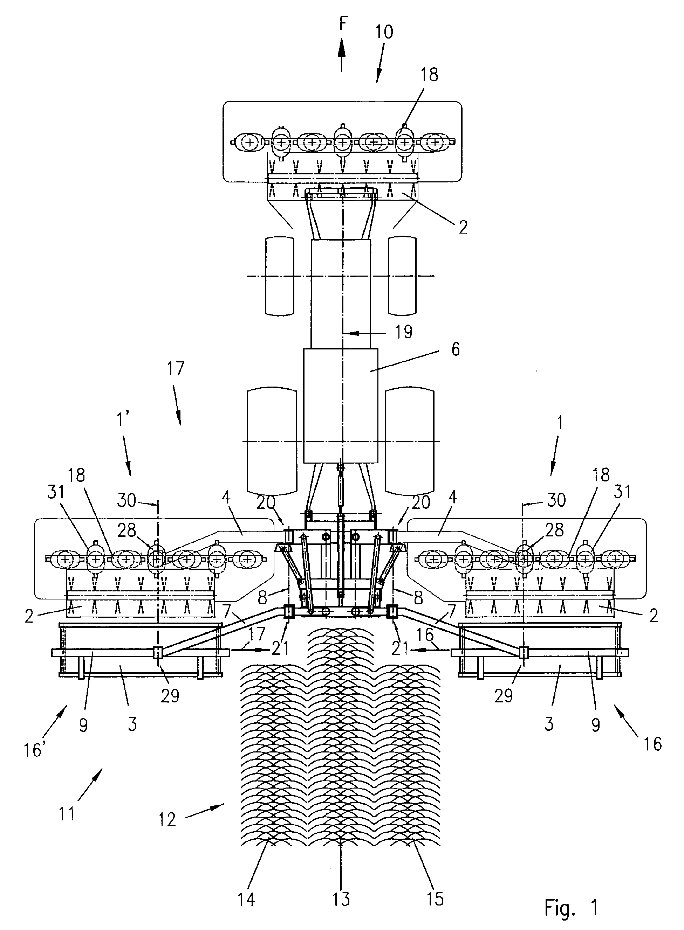

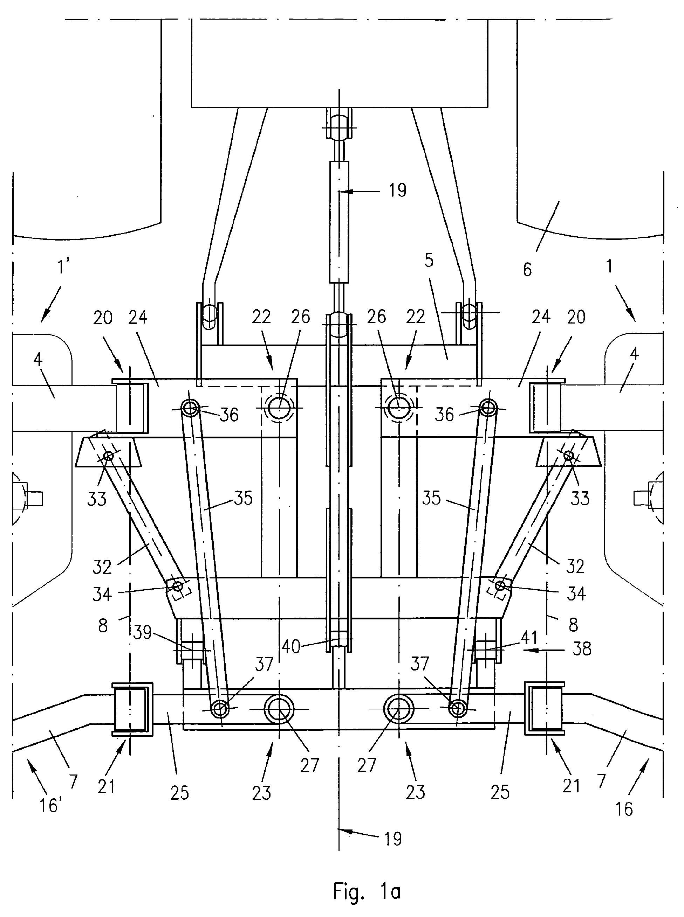

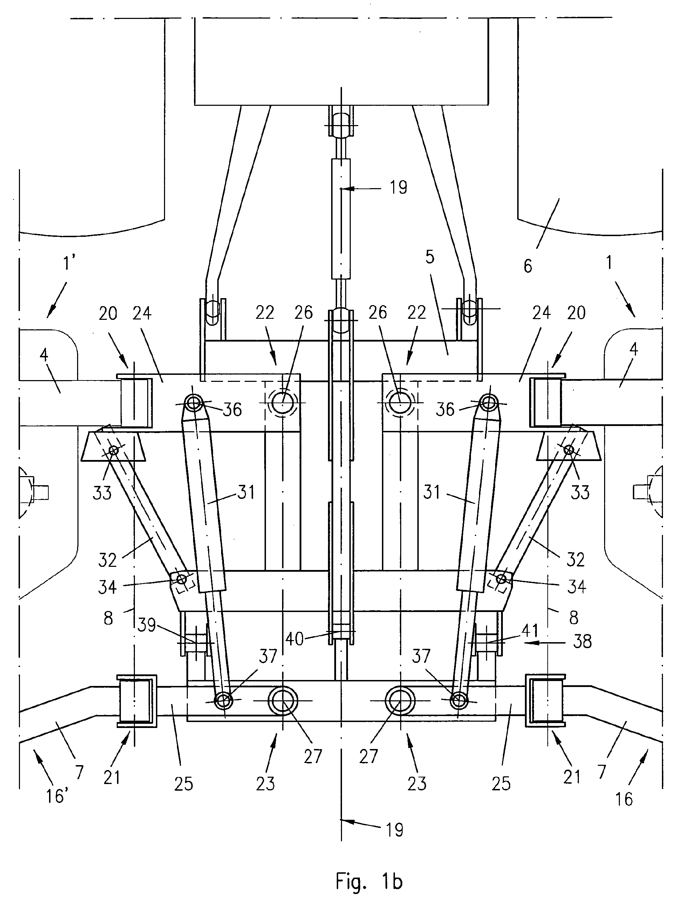

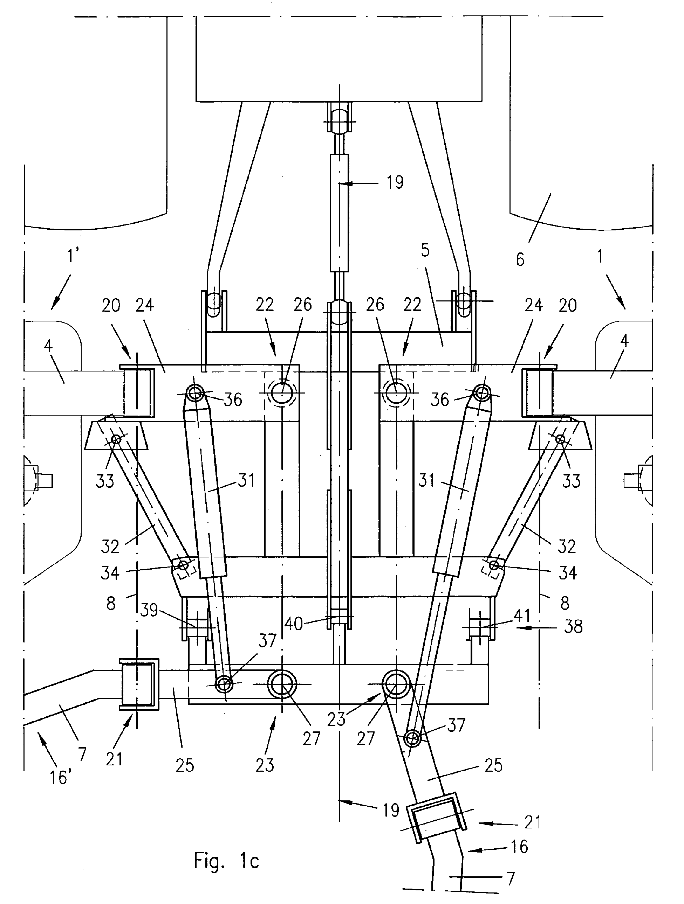

In Fig.1 ist eine an einem Traktor angebaute Mähwerkskombination in einer Draufsicht in einer Arbeitsstellung dargestellt. Diese besteht im wesentlichen aus einem Traktor 6 mit angebautem Frontmähwerk 10 mit integriertem Aufbereiter 2, einem Doppel-Seitenmähwerk 17 bestehend aus zwei Seitenmähwerken 1 und 1' ebenfalls mit integriertem Aufbereitern 2. Sowohl das Frontmähwerk 10 als auch die Seitenmähwerke 1,1' sind als Scheibenmäher mit Mähbalken 18 und den um lotrechte Achsen umlaufend angetriebenen mit Mähklingen besetzten Mähscheiben dargestellt.

Die Aufbereiter 2 in den Seitenmähern übernehmen gleichzeitig die Funktion der Überkopfförderer, mit denen die Mahd auf die Fördereinrichtung 16,16' als Teil der Querfördereinrichtung 11 übergeben wird.

Jedem der Mähwerke 1,1',10 ist ein Aufbereiter 2, ausgebildet als Knickzetter mit quer zur Fahrtrichtung F ausgerichteter, waagerecht liegender, angetriebener mit V-Zinken besetzter Welle zugeordnet.

Weiterhin ist jedem der beiden Seitenmähwerke 1 bzw. 1' ein Querförderband 3 bzw. 3' mit der Bandförderrichtung 16 bzw. 17 zugeordnet. Dabei haben die Querförderbänder 3,3' die Funktion, die Mahd der Seitenmähwerke 1,1' mit ihren angetriebenen Förderbändern und ihrer Bandförderrichtung 16 bzw. 17 auf die Längsmittelebene 19 zuzufördern, so dass sich insgesamt ein Großschwad 12, bestehend aus den drei Einzelschwaden 13,14,15 des Front- 10 und der beiden Seitenmähwerke 1,1' etwa in der Linie der Längsmittelebene 19 bildet. Die Seitenmähwerke 1,1' einschließlich der Querförderbänder 3,3' sind spiegelsymmetrisch zur Längsmittelebene 19 des Traktors 6 ausgebildet. Die Antriebselemente und deren Antriebsstränge sind aus Gründen der Übersichtlichkeit nicht mit dargestellt worden.

Beide Seitenmähwerke 1,1' und beide Querförderbänder 3,3' sind mittels Auslegern 4 bzw. 7 an einem Tragwerk 5 angeschlagen, wobei das Tragwerk 5 mit den Anschlagpunkten der Dreipunkthydraulik des Traktors 6 verbunden ist.

Zwischen den Auslegern 4 bzw. 7 und dem Tragwerk 5 befinden sich als Verbindungsglieder die Gelenkverbindungsstücke 24 bzw. 25, die tragwerksseitig um überwiegend vertikale Gelenkachsen 26 bzw. 27 in den Gelenkpunkten 22 bzw. 23 mit dem Tragwerk 5, und am gegenüberliegenden äußeren Ende in den Gelenkverbindungen 20 bzw. 21 um die in Fahrtrichtung verlaufende überwiegend horizontale Gelenkachse 8, mit den Auslegern 4 bzw. 7 schwenkbar verbunden sind.

Somit sind die Ausleger 4 bzw. 7, und damit die Seitenmähwerke 1,1' innenseitig, d.h. der Längsmittelebene 19 zugewandt, in den Gelenkverbindungen 20 bzw. 21 mit den Gelenkverbindungsstücken 24 bzw. 25 gelenkig um die horizontale Gelenkachse 8, und außenseitig an ihren freien Enden in den Gelenkverbindungen 28 bzw. 29 um die in Fahrtrichtung verlaufende überwiegend horizontale Gelenkachse 30, mit den Mähbalken 31 bzw. mit dem Querförderband 3,3' schwenkbar verbunden.

Die Gelenkverbindung 29 ist dabei Teil eines Portalrahmens 9. welcher das jeweilige Querförderband 3,3' so übergreift, dass der Gutstrom ungehindert unterhalb des Portalrahmens hindurchfließen kann.

In der Arbeitsstellung der Mähwerkskombination, wie in Fig. 1 dargestellt, liegen die Gelenkachsen 8 der Gelenke 20 und 21 idealerweise auf einer gemeinsamen Geraden. Dieses gilt auch für die Gelenkachsen 30 der Gelenke 28 und 29. Dabei verlaufen die Gelenkachsen 8 und die Gelenkachsen 30 idealerweise parallel zueinander.

Dabei stützen sich die Querförderbänder 3,3' jeweils auf den ihnen in Fahrtrichtung vorgelagerten Mähwerken 1 bzw. 1' so ab, dass diese, bedingt durch Rollbewegungen der Bodenanpassung der Mähbalken 31 der Mähwerke 1,1', diesen ebenfalls folgen können. Da beide Ausleger 4 und 7 jeweils um die gleichen Gelenkachsen 8 bzw. 30 momentan drehen können, können sie synchron ohne Zwängungen gleich Höhen- und Rollbewegungen, dem Bodenrelief folgend, ausführen. Durch die eigenständige Anlenkung des Mähwerks 1,1' mit dem Ausleger 4 und durch die eigenständige Anlenkung des Querförderbandes 3,3' mit dem Ausleger 7 an das Tragwerk 5, wird insbesondere der Ausleger 4 erheblich geringer auf Torsion belastet, da das Querförderband 3,3' weit hinter dem Ausleger 4 liegt, welches durch den außermittigen Lastangriff ein erhebliches Torsionsmoment auf den Ausleger 4 ausüben würde, wenn dieses allein von dem Ausleger 4 aufgenommen werden müsste.

Damit die Seitenmähwerke 1.1' und die Förderbänder 3,3' in Ihrer Arbeitsposition gehalten werden, müssen sie in dieser Position gegen unbeabsichtigtes Verschwenken um die vertikalen Gelenkachsen 26 bzw. 27 der Gelenkverbindung 22 bzw. 23 gegenüber dem Tragwerk 5 durch eine Drehmomentenstütze 32 abgestützt werden.

Diese Funktion übernimmt zum einen die Drehmomentenstütze 32, ausgebildet in dem Ausführungsbeispiel als Druckstrebe, die in den Gelenkpunkten als Widerlagern 33 und 34 angeschlagen und am Traggestell 5 abgestützt ist, und zum anderen die Koppelstange 35, die in den Gelenkpunkten 36 und 37 angeschlagen ist. Dabei sind die Gelenkpunkte 36 bzw. 37 jeweils Teil der Gelenkverbindungsstücke 24 bzw. 25.

In einer besonders vorteilhaften Ausgestaltung der Erfindung kann die Drehmomentenstütze 32 in bekannter Weise als Anfahrsicherung und Überlastsicherung ausgebildet sein. Dadurch sind die Ausleger 4 und 7 in Ihrer Arbeitsteilung gegenüber dem Tragwerk fixiert, solange die Überlastsicherung als Anfahrsicherung nicht anspricht.

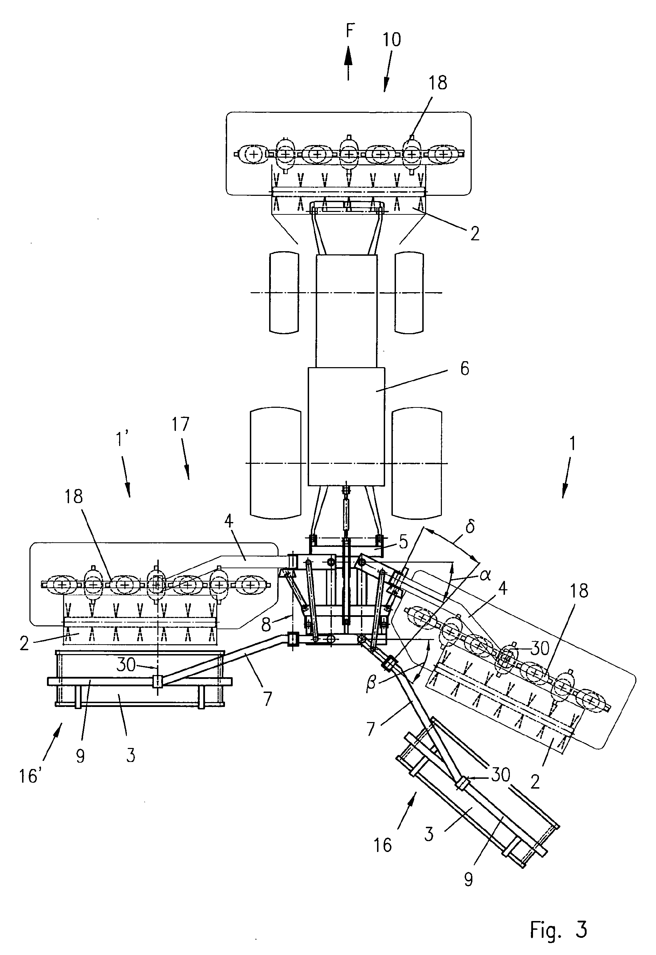

Derartige Überlastsicherungen können beispielsweise durch federvorgespannte Schnappriegelverbindungen, oder beispielsweise auch durch einen doppeltwirkenden Hydraulikzylinder, dessen Kolben durch ein Druckbegrenzungsventil eingespannt ist, realisiert werden. Gemeinsam sind derartigen Lösungsformen von Druckstreben mit integrierter Überlastsicherung als Anfahrsicherung, dass sie bei einer definierten Überlast ansprechen und eine Abstandveränderung der Krafteinleitungspunkte in den Widerlagern zwischen der Druckstrebe und dem Tragwerk 5 zulassen und ermöglichen. Eine derartige Situation einer angesprochenen Überlastsicherung ist in Fig. 3 dargestellt. Dabei ist aus Gründen der Übersichtlichkeit auf eine explizite Darstellung der Ausgestaltung der Überlastsicherung verzichtet worden.

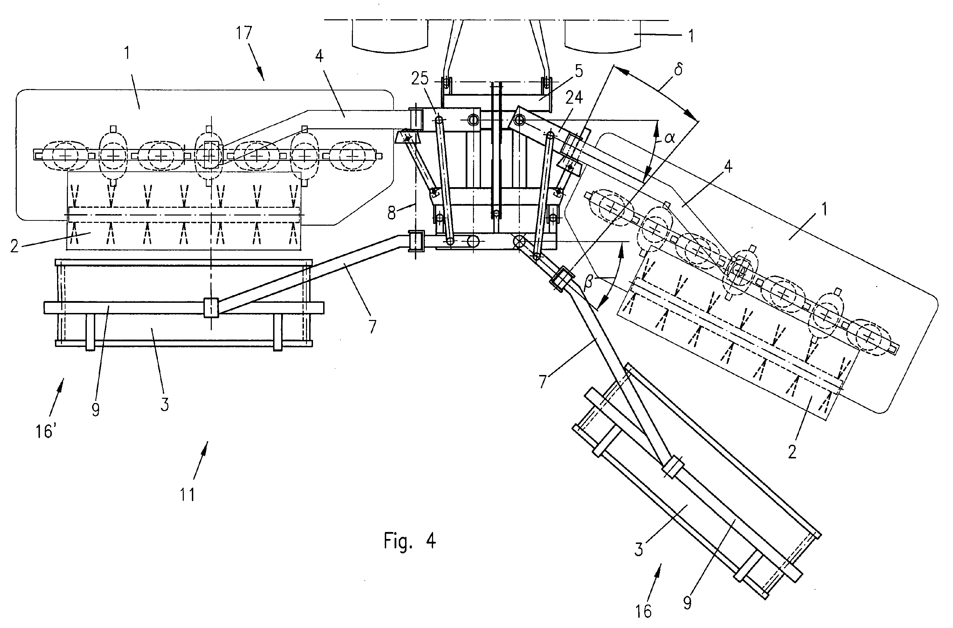

Das Seitenmähwerk 1 ist nach Ansprache der Überlastsicherung rückwärtig um die vertikale Schwenkachse 26 der Gelenkverbindung 22 ausgeschwenkt. Fig. 4 verdeutlicht diese Situation in einem vergrößerten Maßstab als Teilausschnitt der Fig. 3. Durch das Ansprechen der Überlastsicherung hat das Seitenmähwerk 1 eine Verschwenkung um den Winkel α erfahren. Die Folge ist eine Verringerung des Abstands der Widerlager der Drehmomentenstütze 32, wobei die Widerlager als Gelenkpunkte mit vertikalen Drehachsen ausgebildet sind.

Im Falle des Ansprechens einer Überlastsicherung und in dessen Folge des rückwärtigen Verschwenkens eines Seitenmähwerks 1 oder 1' wechselt momentan der Belastungsfall für die Koppelstange 35, indem diese dann zur Druckstrebe wird.

Da nun die Gelenkverbindungsstücke 24 und 25 durch die Koppelstange 35 untereinander gelenkig gekoppelt sind, wobei die Gelenkpunkte 26,27,36,37 ein Gelenkviereck bilden, welches eine Lenkerkopplung zwischen dem Ausleger 4 eines Mähwerks 1,1' und dem Ausleger 7 eines Förderbandes 3,3' darstellt, verschwenkt im Falle des Ausschwenkens des Mähwerks 1,1' um den Winkel α gleichermaßen das Förderband 3,3' um seine jeweilige vertikale Schwenkachse 27 der Gelenkverbindung 23 um den Winkel β. Dabei ist die Anlenkung der Koppelstange 35 in den Gelenkpunkten 36,37 so gewählt, dass die horizontalen Schwenkachsen der Gelenkverbindungen 20,21, die in der Arbeitsstellung eine gemeinsame Schwenkachse 8 bilden, nunmehr um den Winkel δ derart divergieren, dass das Förderband 3,3' in seiner Schwenkbewegung dem Mähwerk 1,1' in rückwärtiger Richtung während des Schwenkens voreilt. Dadurch ist sichergestellt, dass die Fördereinrichtung (16,16') in Falle des Ansprechens der Anfahrsicherung um einen Schwenkwinkel (β) ausweichen kann, dessen Betrag schneller als der Betrag des Schwenkwinkel (α) ansteigt. Dieses verhindert Beschädigungen durch kontaktierende Relativverschiebungen zwischen dem Mähwerk 1,1' mit dessen Aufbereiter 2 und dem Förderband 3,3'.

In Fig. 1 b ist als Alternative zur Koppelstange 35 in Anlehnung an Fig.1a ein doppelwirkender Hydraulikzylinder 31 als Koppelglied dargestellt, der im gesperrten Zustand die gleiche Funktion, wie die Koppelstange erfüllt. Ein besonderer Vorteil der Erfindung besteht aber darin, dass, wie in Fig. 1c dargestellt, mit diesem doppelwirkenden Hydraulikzylinder 31 als Betätigungselement der zweite Ausleger 7, unabhängig vom ersten Ausleger 4 um die vertikale Schwenkachse 27 verschwenkt werden kann. Dadurch kann beispielsweise auch der zweite oder letzte Ausleger 7 zusätzlich in eine rückwärtige Transportposition verschwenkt werden.

Aufgrund dieser konstruktiven Ausgestaltung der Anlenkung der Mähwerke 1,1' mit deren integrierten Aufbereitern 2 und aufgrund dieser konstruktiven Ausgestaltung der Anlenkung der Querförderbänder 3,3' an das Tragwerk 5, sind sowohl die Mähwerke 1,1' als auch die Querförderbänder 3,3' um die etwa fahrtrichtungsparallelen Schwenkachsen 8, mittels aus Gründen der Übersichtlichkeit nicht näher dargestellter Schwenkantriebe, von der Arbeitsposition in ihre jeweilige Transportposition hochklappbar, so dass dadurch die zulässige Transportbreite des öffentlichen Verkehrs nicht überschritten wird. Dabei ist es von besonderem Vorteil, wenn jedem Ausleger (4,7) zum Verschwenken um seine horizontale Gelenkachse (8) ein eigener Stellantrieb als Hydraulikzylinder zugeordnet ist, der aus Gründen der Übersichtlichkeit nicht mit dargestellt ist.

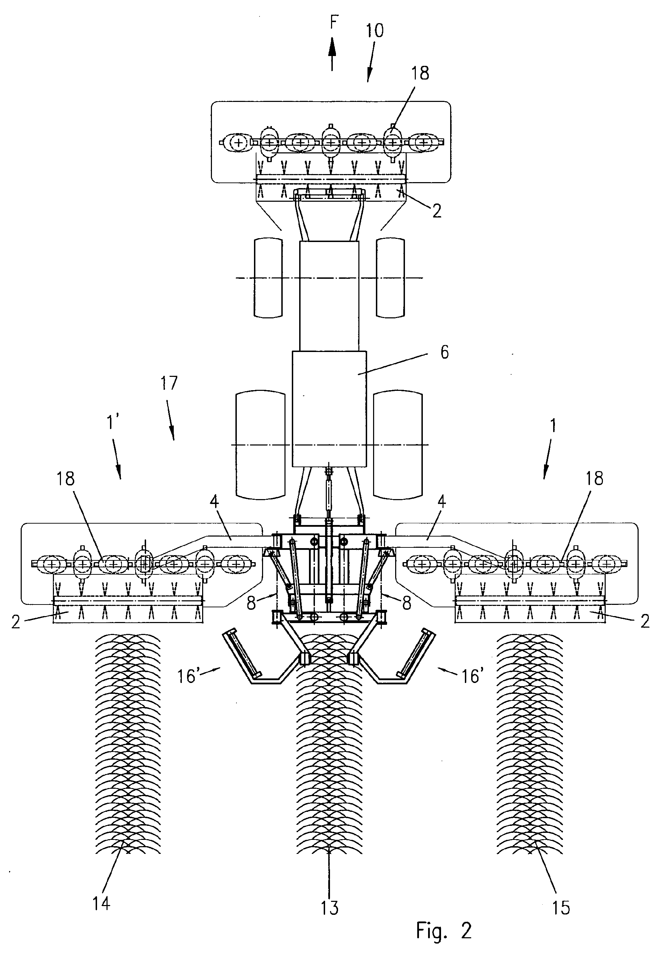

Ein weiterer Vorteil der Erfindung besteht darin, das alternativ auch durch ein Hochschwenken der Förderbänder 3,3' der Querfördereinrichtung 11 diese völlig mit dem Mähprozess außer Eingriff gebracht werden können. Dieses ist dann wünschenswert, wenn nach dem Mähprozess die Einzelschwade auseinander gestreut werden sollen. Dieses ist in der Fig. 2 zum Ausdruck gebracht. In diesem Fall werden drei Einzelschwade 13,14,15 gebildet, die dann zueinander beabstandet sind.

Des Weiteren ist die Erfindung so ausgestaltet, dass eine völlige Entkopplung der Querfördereinrichtung 11 von den Seitenmähwerken 1.1' möglich ist. Dazu ist das Tragwerk 5 rückwärtig mit einer Kupplungseinrichtung 38 , beispielsweise mit einer Dreipunktkupplung nach dem Prinzip der Dreipunkthydraulik von Traktoren ausgestattet, wobei die Querfördereinrichtung 11 ebenfalls über entsprechende Kupplungspunkte 39,40,41, verfügt. Diese Kupplungseinrichtung 38 definiert somit eine lösbar kuppelbare Schnittstelle zwischen den Mähwerken 1,1' und einer Querfördereinrichtung 11.

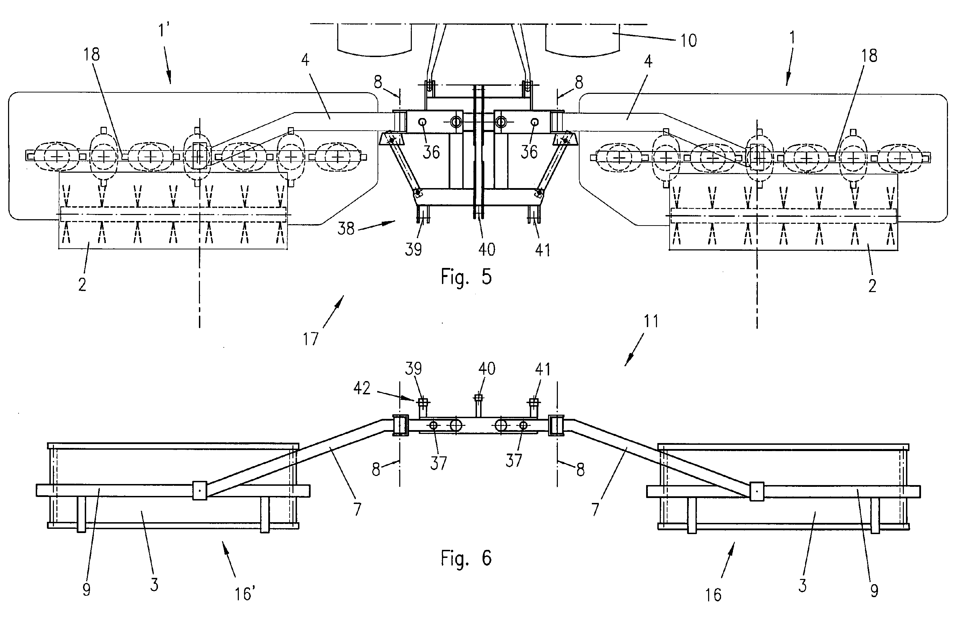

Die Fig. 5 und die Fig. 6 verdeutlichen diesen Zusammenhang. Besonders der Einsatz von Schnellkupplungseinrichtungen, wie beispielsweise ein Kupplungsdreieck, ermöglichen ein schnelles An- bzw. Abkoppeln der Querfördereinrichtung 11.

Dieses beinhaltet den besonderen Vorteil, dass die Querfördereinrichtung 11 für den Fall, dass die Bildung eines Großschwads 12 für den Häckselvorgang zur Silageerzeugung vorgesehen ist, diese mitgeführt werden kann, wohingegen die Querfördereinrichtung 11 für den Fall, dass Einzelschwaden 13,14,15 mit nachfolgendem Streuvorgang vorgesehen ist, diese nicht mitgeführt werden muss. Dieses ermöglicht gerade im letzteren Fall den Einsatz kleinerer Traktore und schont gleichermaßen wegen der geringeren Belastung die Traktore und die Fahrbahndecken, welches insgesamt zu einer wirtschaftlicheren Nutzung eines derartigen Mähwerks beiträgt.

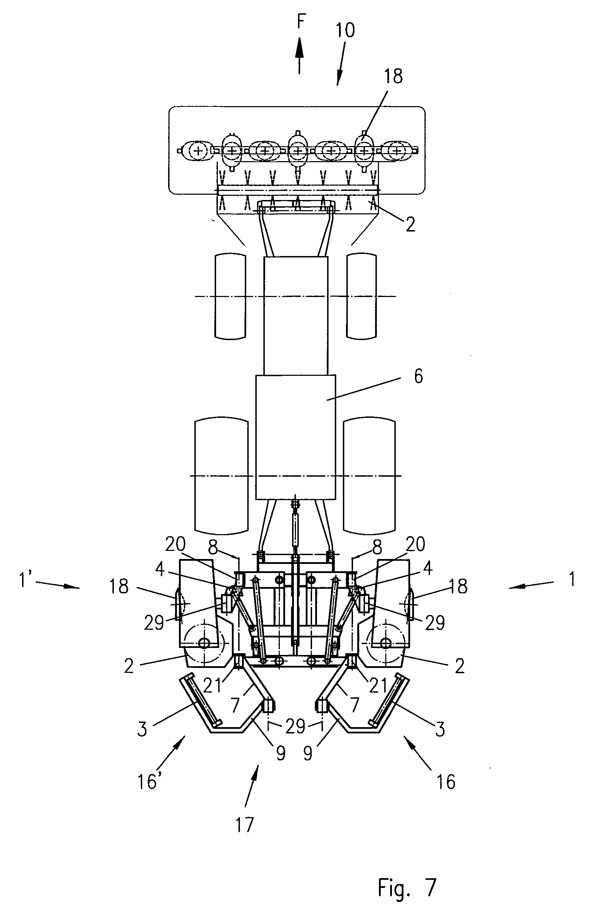

Fig. 7 zeigt in einer Draufsicht die Mähwerkskombination mit hochgeklappten Auslegern 4 und 7 in einer Transportstellung.

Bedingt dadurch, das die zweiten Ausleger 7, an dem die jeweilige Fördereinrichtung 16 bzw.16' befestigt ist, um die vertikale Gelenkachse 27 verschwenkbar sind, können die zweiten Ausleger 7 tragenden Fördereinrichtungen 16,16 Relativbewegungen in Form von Schwenkbewegungen gegenüber den Seitenmähwerk 1,1' und zwar unabhängig von den Schwenkbewegungen der Ausleger 7 um deren horizontalen Gelenkachse 8 ausführen.

Dadurch bedingt ist es nun möglich, dass die Fördereinrichtung 16,16' die von einem Teil des Seitenmähwerk 1,1' übergriffen wird, zum Beispiel von einem Teil der Schutzeinrichtung, die das Förderband 3 übergreift, mit dem Mähwerk außer Eingriff gebracht werden kann und dann unabhängig vom dem Ausleger 4 tragenden Mähbalken 18 um die horizontale Gelenkachse 8 verschwenkt werden kann.

Somit kann der Bewegungsablauf von Mähbalken 18 und Fördereinrichtung 16,16' für das Verbringen in deren Transportstellung bzw. umgekehrt in deren Arbeitsstellung variabel in seiner Abfolge gestaltet werden, z.B. wie folgt:
a) Verschwenken der Fördereinrichtung 16,16' um die vertikale Gelenkachse wahlweise in oder entgegen der Fahrtrichtung F,
b) Verschwenken der Fördereinrichtung 16,16' um die Gelenkachse 8 wahlweise auf- oder abwärts gerichtet,
c) Verschwenken der Mähwerke (1,1') um die Gelenkachse (8) wahlweise auf- oder abwärts gerichtet,

In der Folge dieses variablen Bewegungsablaufes ist es nunmehr möglich, die Fördereinrichtung trotz des Übergriffes von Teilen des Aufbereiters wahlweise im laufenden Mähbetrieb einzubringen d.h. in Eingriff zu bringen oder diese außer Eingriff in eine hochgeklappte Transportstellung zu verbringen. Die Ansteuerung dieser Bewegungsabläufe kann vom Fahrersitz aus fernbedienbar vorgenommen werden, wobei die Ausgestaltung einer derartigen Steuerung im Wissen und Können eines Fachmanns liegt und daher an dieser Stelle keiner näheren Erläuterung bedarf.

Die Erfindung, wie zuvor näher an dem Ausführungsbeispiel dargelegt, bei dem ein Förderband 3 an dem Ausleger angelenkt ist, kann ebenfalls in analoger Weise und direkt angewandt werden auf einen Aufbereiter, der an einem Ausleger angelenkt ist. Ebenfalls ist auch eine Kombination derart möglich, dass insgesamt drei Ausleger hintereinander angeordnet sind, die ebenfalls in einer fluchtenden horizontalen Schwenkachse 8 an einem Traggestell 5 angelenkt sind. Dabei kann an dem ersten Ausleger das Mähwerk, an dem zweiten Ausleger der Aufbereiter und an dem dritten Ausleger ein Förderband angelenkt sein.

Auch können dabei die verschiedenen Zusatzeinrichtungen, wie Aufbereiter oder Fördereinrichtung durch entsprechende Kupplungseinrichtungen von dem Traggestell abgekoppelt werden oder möglicherweise durch andere austauschbare Einrichtungen ersetzt werden. Dieses setzt jedoch voraus, dass die Kupplungseinrichtung 42 einer Zusatzeinrichtung, beispielsweise die eines Aufbereiters 3, oder die einer Fördereinrichtung 16 oder 16', mit der Kupplungseinrichtung 38 des Tragwerks 5 kompatibel ist.

Die Erfindung ist dabei keineswegs auf an Traktore anbaubare oder von Traktoren gezogene Mähwerke beschränkt. Sie kann gleichermaßen auch auf Seitenmähwerke selbstfahrender Mähwerke angewendet werden.

### Bezugszeichenliste

- 1,1': Seitenmähwerk
- 2: Aufbereiter
- 3,3': Förderband
- 4: Ausleger
- 5: Tragwerk
- 6: Traktor
- 7: Ausleger
- 8: horizontale Gelenkachse
- 9: Portalrahmen
- 10: Frontmähwerk
- 11: Querfördereinrichtung
- 12: Großschwad
- 13: Einzelschwad
- 14: Einzelschwad
- 15: Einzelschwad
- 16,16': Fördereinrichtung
- 17: Doppelseitenmähwerk
- 18: Mähbalken
- 19: Längsmittelebene
- 20: Gelenkverbindung
- 21: Gelenkverbindung
- 22: Gelenkverbindung
- 23: Gelenkverbindung
- 24: Gelenkverbindungsstück
- 25: Gelenkverbindungsstück
- 26: vertikale Gelenkachse
- 27: vertikale Gelenkachse
- 28: Gelenkverbindung
- 29: Gelenkverbindung
- 30: horizontale Gelenkachse
- 31: Hydraulikzylinder
- 32: Drehmomentenstütze
- 33: Widerlager
- 34: Widerlager
- 35: Koppelstange
- 36: Gelenkpunkt
- 37: Gelenkpunkt
- 38: Kupplungseinrichtung
- 39: Kupplungspunkt
- 40: Kupplungspunkt
- 41: Kupplungspunkt

## Patentansprüche

1. Verfahren zum Überführen eines Seitenmähwerks (1 oder 1') in unterschiedliche Betriebszustände und für den Anbau an Traktoren (6) oder als Teil selbstfahrender Mähwerke, mit um lotrechte Achsen angetriebene mit Mähklingen besetzte Mähwerkzeuge und einem Aufbereiter (2) und mit einer hinter dem Mähwerk nachgeschalteten Fördereinrichtung (16 oder 16'), zum seitlichen Versetzen und Ablegen der Mahd, und wobei Mähwerk (1) und Aufbereiter (2) eine Baueinheit bilden und durch einen Ausleger (4) mit dem Tragwerk (5) in einer Gelenkverbindung um eine überwiegend in Fahrtrichtung (F) ausgerichtete horizontale Achse verschwenkbar miteinander verbunden sind, und die Fördereinrichtung (16 oder 16') ebenfalls über einen Ausleger (7) mit dem Tragwerk (5) in einer Gelenkverbindung um eine überwiegend in Fahrtrichtung (F) ausgerichtete horizontale Achse verschwenkbar verbunden sind, **dadurch gekennzeichnet, dass** die Fördereinrichtung (16 und/oder 16') zur Überführung in unterschiedlicher Betriebszustände des Mähbetriebs, nämlich mit und ohne Eingriff in den Mähbetrieb, einem Bewegungsablauf in Ihren Schwenkbewegungen zu deren Überführung unterworfen werden können derart, dass zum einen eine Schwenkbewegung um eine überwiegend horizontale in Fahrtrichtung (F) weisende Gelenkachse (8) und zum anderen eine Schwenkbewegung um eine überwiegend vertikale Gelenkachse der Schwenkachse (27) ausgeführt werden kann, wobei diese Schwenkbewegungen variabel in ihrer Abfolge und unabhängig voneinander um ihre Gelenkachsen (8,27) ausgeführt werden können.

2. Verfahren nach Anspruch 1, **dadurch gekennzeichnet, dass** der Bewegungsablauf wie folgt
a) Verschwenken der Fördereinrichtung (16,16') um die vertikale Gelenkachse wahlweise in oder entgegen der Fahrtrichtung (F),
b) Verschwenken der Fördereinrichtung (16,16') um die Gelenkachse (8) wahlweise auf- oder abwärts gerichtet,
c) Verschwenken der Mähwerke (1,1') um die Gelenkachse (8) wahlweise auf- oder abwärts gerichtet und wahlweise gemeinsam mit und ohne Fördereinrichtung (16,16'),
so ablaufen kann, dass wahlweise jeder dieser Bewegungsabläufe unabhängig von jeweils anderen angesteuert und ausgeführt werden kann.

3. Verfahren nach Anspruch 1 und 2, **dadurch gekennzeichnet, dass** die Bewegungsabläufe von Druckmittelzylindern, insbesondere ausgeführt als Hydraulikzylinder, betätigt und ausgeführt werden.
